# EUROPEAN PATENT APPLICATION

(11) **EP 3 666 877 A1**
(43) Date of publication of application: **17.06.2020**
(21) Application number: 18843701.6
(22) Date of filing: 07.08.2018
(51) Int. Cl.: C12G 3/08

(54) **METHOD FOR VACUUM-DISTILLING AND AGING BREWAGE, AND ALCOHOLIC BEVERAGE**

(30) Priority: 08.08.2017 JP 2017153625
(71) Applicant: Naorai Inc., Kure-shi, Hiroshima 734-0304 (JP)
(72) Inventor: MIYAKE, Koichiro, Kure-shi Hiroshima 734-0304 (JP); FUKUMOTO, Yasufumi, Aioi-shi Hyogo 678-0005 (JP)
(74) Representative: Grünecker Patent- und Rechtsanwälte PartG mbB
(86) International application number: PCT/JP2018/029524
(87) International publication number: WO 2019/031475

(57) **Abstract**

As to a pre-produced brewage such as Japanese rice wine, a method for distilling a brewage under reduced pressure, which enables the increase in the alcohol concentration with low energy and in a short period of time without impairing the aroma and taste is provided. Provided is a method for distilling a brewage under reduced pressure, which is characterized by including: an alcohol vapor production step of producing vapor derived from a pre-produced brewage at a temperature of 55°C or less by performing pressure reduction on the brewage; a condensation step of producing a condensate by cooling the vapor produced in the alcohol vapor production step; and a recovery step of recovering the condensate produced in the condensation step.

## Description

### TECHNICAL FIELD

The present invention relates to a method for distilling a pre-produced brewage under reduced pressure, in particular, a method for distilling a brewage under reduced pressure, which can increase the alcohol concentration without impairing the aroma and taste, a method for aging a brewage, and an alcoholic beverage obtained by distilling a brewage under reduced pressure.

### BACKGROUND ART

In the field of alcoholic beverage, from the various viewpoints of the differentiation, diversification, and the like of products, attempts for increasing the alcohol concentration have been made. As the technique for increasing the alcohol concentration of an alcoholic beverage, techniques of a distillation method, an alcohol addition method, a membrane permeation method, a freeze-drying method, and the like are known (Non Patent Literature 1).

Japanese rice wine, which is one kind of brewages, is an alcoholic beverage generating alcohol, delicious taste and aroma by fermentation, however, there is a limit on the increase in the alcohol concentration only by fermentation. On the other hand, in a case where a method of increasing the alcohol concentration by heating, as in the case of a distilled alcoholic beverage such as Shochu (distilled spirit), the delicious taste and aroma are denatured due to the heat in many cases. In view of this, as the technique for concentrating an alcoholic beverage without heating to a high temperature, in Patent Literature 1, there is a description of a technique for enhancing the delicious taste component in an alcoholic beverage such as Japanese rice wine at a low temperature by using a zeolite membrane. However, in the technique of Patent Literature 1, it has been required to prepare a special zeolite membrane.

Further, it is said that when an alcoholic beverage is aged for a long period of time, the taste becomes mild, and the delicious taste and aroma become improved, and Japanese rice wine aged for a long period of 3 to 30 years is even available on the market. However, a brewage such as Japanese rice wine (refined sake) has an alcohol concentration of only 20 degrees or less, and therefore, it has been considered that such a brewage is not suitable for long-term aging. When aging Japanese rice wine (refined sake) having a low alcohol concentration at ordinary temperature, in a case where the acidity is low, or if an environment where nutrients for the growth of fungi are left is generated, a hiochi bacterium that is one kind of lactic acid bacteria has propagated and the Japanese rice wine has become cloudy in some cases.

Therefore, in a pre-produced brewage such as Japanese rice wine (refined sake), development of a technique for increasing the alcohol concentration without impairing the aroma and taste, and a technique that enables long-term aging has been desired.

### CITATION LIST

### PATENT LITERATURE

PATENT LITERATURE 1: JP 6105923 B

### NON PATENT LITERATURE

NON PATENT LITERATURE 1: Akira Matsuda, "Concentration of Sake Using Freeze Concentration", Industrial Research Institute of Ishikawa, IRII TECHNICAL NEWS, Vol. 39, No. 2 (2014)

### SUMMARY OF INVENTION

### TECHNICAL PROBLEM

The present invention is made in consideration of the above problems, and as to a pre-produced brewage such as Japanese rice wine, particularly refined sake, an object of the present invention is to provide a method for distilling a brewage under reduced pressure, which enables the increase in the alcohol concentration without impairing the aroma and taste, and enables the long-term aging, a method for aging a brewage, and an alcoholic beverage obtained by distilling a pre-produced brewage under reduced pressure.

### SOLUTION TO PROBLEM

As a result of the intensive study to solve the problems described above, the present inventors have found that when Japanese rice wine that is a brewage is distilled at a low temperature under reduced pressure by using a vacuum drying device, an alcoholic beverage that is excellent in the aroma and taste, and is capable of being aged for long period of time can be obtained, and thus have completed the present invention.

Therefore, according to the present invention, the problem is solved by a method for distilling a pre-produced brewage under reduced pressure, including: an alcohol vapor production step of producing vapor derived from a brewage at a temperature of 55°C or less by performing pressure reduction on the brewage; a condensation step of producing a condensate by cooling the vapor produced in the alcohol vapor production step; and a recovery step of recovering the condensate produced in the condensation step.

By performing the distillation of a brewage at a low temperature of 55°C or less by performing pressure reduction on the brewage, the aroma and taste are not impaired, but rather the aroma and taste can be improved. Further, the method for distilling a brewage under reduced pressure of the present invention has an advantage that the energy to be used is smaller and the time to be required is shorter, as compared with a conventional method of increasing an alcohol concentration.

At this time, it is favorable that pressure is reduced to -85 kPa or less in the alcohol vapor production step.

By setting the pressure to -85 kPa or less, vapor derived from a brewage can be produced at a low temperature, and therefore, the alcohol concentration can be increased with low energy and in a short period of time without impairing the aroma and taste.

At this time, it is favorable that the vapor is cooled to 15°C or more and 30°C or less in the condensation step.

By cooling the vapor derived from a brewage at a temperature sufficiently lower than the temperature of the alcohol vapor, the condensation of the vapor is reliably performed, and further reduction in the pressure can be generated along with the reduction in the volume caused by the condensation of the vapor.

At this time, it is suitable that the brewage is Japanese rice wine, and in particular, it is more suitable that the Japanese rice wine is refined sake.

Since Japanese rice wine, particularly refined sake is produced by fermentation, the alcohol concentration is low, however, according to the method for distilling a brewage under reduced pressure of the present invention, the processing is performed at a low temperature under reduced pressure, and therefore, the alcohol concentration can be increased without impairing the aroma and taste.

In addition, it is favorable that the refined sake is Junmai-shu (pure rice sake).

Alcohol for brewing is hardly changed with time, and a feeling of stimulation remains even with the lapse of time. When pure rice sake is used, an effect of improving the aroma and taste due to the aging is more increased as compared with the refined sake to which alcohol for brewing has been added.

Further, according to the present invention, the problem is solved by a method for aging a brewage, further including an aging step of aging the condensate obtained in the method for distilling a brewage under reduced pressure for one year or more.

Since the alcohol concentration of a brewage such as Japanese rice wine is low, such a brewage is considered to be not suitable for long-term aging, however, a condensate recovered by the method for distilling a brewage under reduced pressure of the present invention has an increased alcohol concentration, and therefore, the aroma and taste can be improved by aging.

Further, according to the present invention, the problem is solved by an alcoholic beverage, obtained by distilling a pre-produced brewage at a temperature of 55°C or less under reduced pressure of -85 kPa or less.

In an alcoholic beverage obtained by distilling a pre-produced brewage at a low temperature of 55°C or less by performing pressure reduction on the brewage, the aroma and taste are not impaired, but rather there is an advantage that the aroma and taste are improved.

### ADVANTAGEOUS EFFECTS OF INVENTION

According to the present invention, the alcohol concentration of a pre-produced brewage is increased, and further the aroma and taste can be improved.

Further, the method for distilling a brewage under reduced pressure according to the present invention has an advantage that the energy to be used is smaller and the time to be required is shorter, as compared with a conventional method of increasing an alcohol concentration.

A condensate of a brewage such as Japanese rice wine, obtained by the method for distilling a brewage under reduced pressure according to the present invention has an increased alcohol concentration, and therefore, by aging for a long period of time, the aroma and taste can be improved.

In an alcoholic beverage obtained by distilling a pre-produced refined sake at a low temperature of 55°C or less by performing pressure reduction on the refined sake, the aroma and taste are not impaired, but rather there is an advantage that the aroma and taste are improved.

### BRIEF DESCRIPTION OF DRAWINGS

FIG. 1 is a schematic illustration diagram showing a configuration of a vacuum drying device.
FIG. 2 is a flow chart showing a method for distilling a brewage under reduced pressure and method for aging a brewage, according to the present embodiment.

### DESCRIPTION OF EMBODIMENTS

The present invention relates to a method for distilling a brewage under reduced pressure, a method for aging a brewage, and an alcoholic beverage obtained by distilling a brewage under reduced pressure.

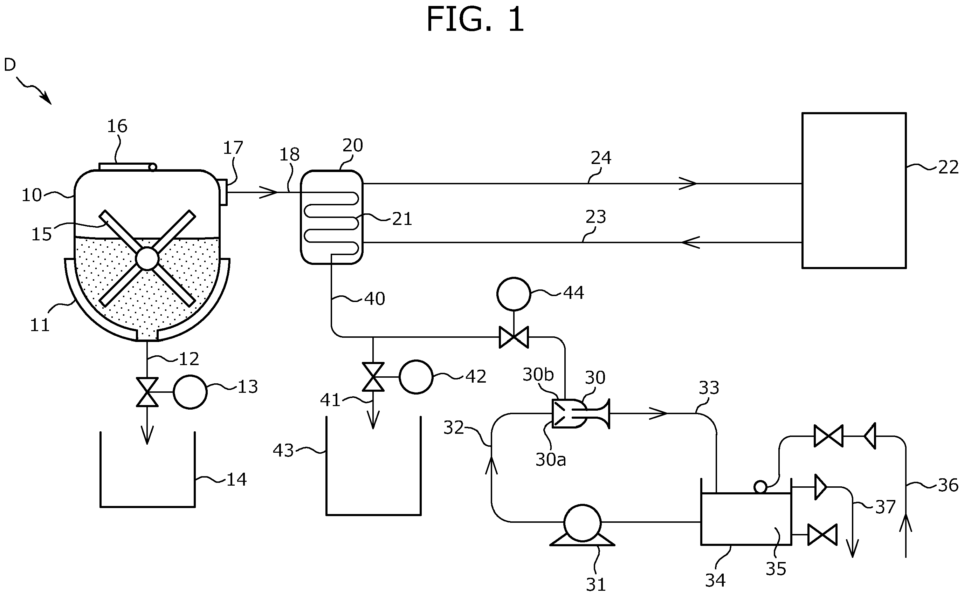

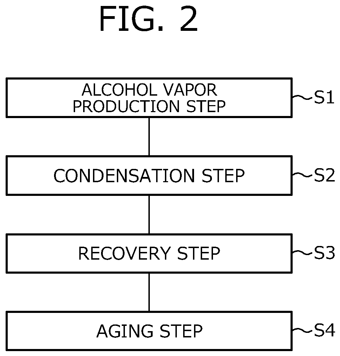

Hereinafter, with reference to FIGs. 1 and 2, a method for distilling a brewage under reduced pressure according to an embodiment of the present invention (hereinafter referred to as "the present embodiment") will be described. The method for distilling a brewage under reduced pressure according to the present embodiment will be described by referring to an example of performing distillation under reduced pressure by using a vacuum drying device. The device to be used here is not limited to a specific device.

In the method for distilling a brewage under reduced pressure according to the present embodiment, as the pre-produced brewage to be subjected to distillation under reduced pressure, a brewage, a mixed liquor using a brewage, or the like can be mentioned. A brewage in which the aroma and taste are impaired by heating, in particular, Japanese rice wine, or refined sake is preferably subjected to distillation under reduced pressure, however, the pre-produced brewage to be subjected to the distillation is not limited thereto.

### (Brewage)

A brewage is an alcoholic beverage obtained by fermenting a raw material as it is or a saccharified raw material. The brewage is roughly classified into a simple fermented liquor and a double fermented liquor. Examples of the simple fermented liquor include, but are not limited to, a wine and a cider, which are made from fruits and the like containing sugar. In a case where the raw material is cereals such as rice and barley, examples of the double fermented liquor include, but are not limited to, beer and Japanese rice wine, which are made by saccharifying starch contained in grain as a raw material, and then by performing alcohol fermentation. In the method for distilling a brewage under reduced pressure according to the present embodiment, the brewage to be subject to distillation under reduced pressure is preferably Japanese rice wine, and particularly preferably refined sake.

### (Japanese rice wine)

The term "Japanese rice wine" is a generic term for a brewage made from rice, and includes refined sake, raw sake, unrefined sake, moromi sake, and the like.

### (Refined sake)

The term "refined sake" is referred to as alcoholic liquors that have been fermented by using rice, malted rice, and water as the raw materials, and filtered, among Japanese rice wines (excluding raw sake, unrefined sake, and moromi sake) . Further, in Japanese Liquor Tax Act, the refined sake is "one fermented by using rice, malted rice, and water as the raw materials, and filtered", and is defined to have an alcohol content of less than 22 degrees.

As an example of the refined sake, a specially designated sake of which the raw materials and production method satisfy certain criteria and to which a specific name such as Ginjo-shu, Junmai-shu (pure rice sake), or Honjozo-shu is indicated can be mentioned.

The term "Ginjo-shu" is referred to as a refined sake that is produced with careful examination by using white rice having a rice-polishing ratio of 60% or less, malted rice, and water, or these materials and brewing alcohol, as raw materials, and has favorable unique flavor and color.

The term "Junmai-shu" is referred to as a refined sake that is produced by using white rice, malted rice, and water as raw materials, and has favorable flavor and color, and is referred to as four kinds of Junmai-shu, Junmai Ginjo-shu, Junmai Daiginjo-shu, and Special Junmai-shu in the following Table 1.

The term "Honjozo-shu" is referred to as a refined sake that is produced by using white rice having a rice-polishing ratio of 70% or less, malted rice, brewing alcohol, and water as raw materials, and has favorable flavor and color.

According to the "Standards for Manufacturing Methods and Quality Indication for Seishu" by Japanese National Tax Agency, the specific names are classified according to the differences in raw materials and production methods into eight kinds of: Ginjo-shu, Daiginjo-shu, Junmai-shu, Junmai Ginjo-shu, Junmai Daiginjo-shu, Special Junmai-shu, Honjozo-shu, and Special Honjozo-shu (Table 1).

**[Table 1]**

| Specific name | Raw materials used | Rice-polishing ratio | Use ratio of malted rice | Requirements of flavor and the like |
|---|---|---|---|---|
| Ginjo-shu | Rice, malted rice, and brewing alcohol | 60% or less | 15% or more | Flavor is unique to Ginjo brewing, and color is favorable |
| Daiginjo-shu | Rice, malted rice, and brewing alcohol | 50% or less | 15% or more | Flavor is unique to Ginjo brewing, and color is particularly favorable |
| Junmai-shu | Rice, and malted rice | - | 15% or more | Flavor and color are favorable |
| Junmai Ginjo-shu | Rice, and malted rice | 60% or less | 15% or more | Flavor is unique to Ginjo brewing, and color is favorable |
| Junmai Daiginjo-shu | Rice, and malted rice | 50% or less | 15% or more | Flavor is unique to Ginjo brewing, and color is particularly favorable |
| Special Junmai-shu | Rice, and malted rice | 60% or less, or special production method (requires indication of the description) | 15% or more | Flavor and color are particularly favorable |
| Honjozo-shu | Rice, malted rice, and brewing alcohol | 70% or less | 15% or more | Flavor and color are favorable |
| Special Honjozo-shu | Rice, malted rice, and brewing alcohol | 60% or less, or special production method (requires indication of the description) | 15% or more | Flavor and color are particularly favorable |

In the method for distilling a brewage under reduced pressure according to the present embodiment, as the refined sake to be subjected to distillation under reduced pressure, a refined sake in which the amount of the brewing alcohol to be used is 50/100th or less of the weight of the rice (including the rice used in malted rice) as the raw material is preferred, a refined sake in which the amount of the brewing alcohol to be used is 10/100th or less of the weight of the rice (including the rice used in malted rice) as the raw material is more preferred, and a refined sake obtained without using brewing alcohol, that is, Junmai-shu (pure rice sake) is particularly preferred.

Alcohol for brewing is hardly changed with time, and a feeling of stimulation remains even with the lapse of time, and therefore, high quality aging cannot be achieved. Therefore, when a refined sake is aged after distillation under reduced pressure, if the refined sake is Junmai-shu (pure rice sake), an effect of improving the aroma and taste is larger as compared with that in a refined sake obtained by adding alcohol for brewing.

### (Wine)

Wine is one kind of fruit wines, and is obtained by fermenting juice of grapes by the action of yeast and storing the fermented juice in a barrel or a bottle as needed. In the method for distilling a brewage under reduced pressure according to the present embodiment, the wine to be subjected to distillation under reduced pressure is red wine, white wine, rose wine, or the like, however, the wine is not limited thereto. The variety and growing area of the grapes used for wine, the kind of the yeast used in fermentation, production conditions, and the like are not limited.

### (Mixed liquor)

A mixed liquor is an alcoholic beverage obtained by mixing components such as skin and fruits of plants, a medicinal herb, an herb, a spice, a sweetener, and a fragrances in a brewage or a distilled alcoholic beverage as the raw material. In the method for distilling a brewage under reduced pressure according to the present embodiment, the mixed liquor to be subjected to distillation under reduced pressure is vermouth or the like obtained by using a brewage as the raw material, however, the mixed liquor is not limited thereto.

### <Vacuum drying device>

FIG. 1 is a schematic illustration diagram showing a configuration of a vacuum drying device D that can be used in the method for distilling a brewage under reduced pressure according to the present embodiment. The vacuum drying device D includes a container 10 that houses a material to be processed, a capacitor 20 that cools the vapor coming out of the container 10, and an ejector 30 as a means for pressure reduction that reduces the pressure inside the container 10, as the main configuration.

Around the lower portion of the container 10, a vapor chamber 11 for heating the container 10 by being supplied with water vapor from a steam boiler (not shown) that is a steam heating means is formed. In the bottom portion of the container 10, a discharge pipe 12 that is connected to a discharge port for taking out the material to be processed after processing is provided, and a valve for discharge 13 for discharging the material to be processed after drying into a discharge box 14 is provided. Inside the container 10, stirring blades 15 for stirring the material to be processed is provided, in the upper portion of the container 10, an inlet port 16 equipped with a lid that is openable and closable is provided, and a material to be processed is charged into the container 10 through the inlet port 16. On an upper side surface of the container 10, an exhaust port 17 for vapor that is sucked by an ejector 30 is provided, and to the exhaust port 17, an exhaust pipe 18 leading to a cooling pipe 21 in a capacitor 20 is connected.

In FIG. 1, the capacitor 20 cools and condenses the vapor passing through the cooling pipe21 by the cooling water supplied from a cooling unit 22 through a water supply pipe 23. To the capacitor 20, a drain pipe 24 for discharging the cooling water flowing in from the water supply pipe 23 is connected. The preset temperature of the cooling water to be circulated through the cooling unit 22 and the water supply pipe 23 is set to be a temperature lower by 5°C or more than the evaporation temperature, and is set to be, for example, 20°C or more and 30°C or less. The amount of the cooling water varies depending on the amount to be processed, that is, the amount of the vapor generated in the container 10.

A fluid inlet port 30a of the ejector 30 is connected to a water tank 34 through a water supply pipe 32 provided with a pump 31, and a silencer (not shown) is attached to the tip of a drain pipe 33 of the ejector 30, and is arranged so as to be submerged in water in the water tank 34. A fluid suction port 30b of the ejector 30 is connected to the cooling pipe 21 of the capacitor 20 through a pipe 40. In addition, to a portion between a vacuum valve 44 and the condenser 20 in the pipe 40, a condensate recovery pipe 41 equipped with a recovery valve 42 for recovering a condensate is connected.

The operation of the vacuum drying device D is performed as follows. At the start of operation, cooling water is supplied to a capacitor 20 from a cooling unit 22. Further, a water tank 34 is filled with water up to a predetermined water level. First, a material to be processed is charged in a container 10 from an inlet port 16, and a lid of the inlet port 16 is closed. Subsequently, when a start switch (not shown) is turned on, a driving mechanism (not shown) is started to rotate stirring blades 15, and as a result of which the material to be processed in the container 10 is stirred. Simultaneously with the stirring, water vapor for heating is supplied into a vapor chamber 11 from a steam boiler (not shown) to perform heating. The heat applied to the container 10 is transmitted to the material to be processed, and is effectively transmitted to the entire material to be processed by stirring the material to be processed with the stirring blades 15, and as a result of which the generation of vapor is promoted.

In addition, a pump 31 for an ejector 30 is driven, jet water is ejected in the ejector 30, and gently flows out into water in a water tank 34 through a drain pipe 33. In this way, suction force of fluid is applied to a fluid suction port 30b of the ejector 30. When a vacuum valve 44 is opened, the suction force acting on the fluid suction port 30b of the ejector 30 functions to the container 10 through an exhaust pipe 18, a cooling pipe 21, and a pipe 40, and therefore, the vapor and air inside the container 10 are sucked. As a result, the pressure inside the container 10 can be reduced from atmospheric pressure to a pressure of, for example, 20 to 40 Torr (-98.6 kPa to -96.0 kPa).

In this way, the pressure inside the container 10 is reduced, a liquid such as water or ethanol contained in the material to be processed in the container 10 evaporates even at a low temperature. For example, under reduced pressure of -98 kPa, the boiling point of the water in the material to be processed in the container 10 is around 25°C, and the boiling point of the ethanol is around 10°C. Therefore, when heating is performed under reduced pressure, evaporation of the water and ethanol contained in the material to be processed in the container 10 is started. Since the vapor generated by the evaporation of water and ethanol is sucked into the ejector 30 by the suction force acting on the fluid suction port 30b of the ejector 30, the evaporation of the water and ethanol contained in the material to be processed in the container 10 is continued.

In this regard, all or part of the vapor generated by the evaporation of the water and ethanol contained in the material to be processed in the container 10 is heat exchanged with a cooling medium circulating through a water supply pipe 23 from a cooling unit 22 in the capacitor 20, and is rapidly cooled and condensed to turn into a liquid. When a recovery valve 42 is opened after the start of the flowing out of a condensate from the capacitor 20, the condensate is stored in a condensate recovery tank 43 from a condensate recovery pipe 41 through the pipe 40 by the suction force generated by the ejector 30. In this way, the vapor generated by the evaporation of the water in the material to be processed can be recovered by returning the vapor to water so as not to be diffused into the atmospheric air.

Since ethanol has a boiling point lower than that of water, ethanol is easier to evaporate than water, and therefore, the ethanol can be recovered from a brewage that is the material to be processed, and the remaining water content and the like after recovering the ethanol are discharged from a discharge pipe 12.

In a case where the vacuum drying device D is used, a condensate obtained by generating vapor at a low temperature while maintaining the inside of the container 10 in a reduced pressure state and by condensing the generated vapor by cooling is not deteriorated due to the heating at a high temperature, and thus has an advantage of having favorable flavor.

### <Method for distilling brewage under reduced pressure>

Next, the method for distilling a brewage under reduced pressure according to the present embodiment will be described.

The method for distilling a brewage under reduced pressure of the present embodiment is characterized by including: an alcohol vapor production step of producing vapor derived from a pre-produced brewage at a temperature of 55°C or less by performing pressure reduction on the brewage; a condensation step of producing a condensate by cooling the vapor produced in the alcohol vapor production step; and a recovery step of recovering the condensate produced in the condensation step.

Hereinafter, each step will be described in detail with reference to FIG. 2.

### (Alcohol vapor production step)

In an alcohol vapor production step, pressure reduction is performed on a pre-produced brewage to produce vapor derived from the brewage at a temperature of 55°C or less (Step S1).

Specifically, at first, pressure reduction is performed on a brewage charged into a container. The pressure of pressure reduction is preferably -85 kPa or less, more preferably -90 kPa or less, furthermore preferably -92 kPa or less, and particularly preferably -95 kPa or less, but is not limited thereto. The lower the pressure of pressure reduction is, the lower the temperature is, at which vapor derived from a brewage is produced. In this regard, generally, the pressure is reduced at -101.3 kPa or more that is an absolute vacuum. In the present specification, the pressure is expressed as a gauge pressure where the atmospheric pressure is set to zero. That is, -85 kPa means a pressure lower by 85 kPa than 101.3 kPa (1 atm). It is desirable that the pressure reduction is performed by using an ejector that consumes less energy.

In order to evaporate a liquid to turn the liquid into a gas, latent heat is required. Since the energy of the latent heat of water vapor is larger than that of the sensible heat of warm water, in a case where latent heat is applied to a brewage by using water vapor at 100°C to 105°C, the processing time can be shortened as compared with the processing time in the case where sensible heat is applied to a brewage by using warm water at 45 to 60°C.

An evaporation temperature of ethanol that is an alcohol component contained in a brewage is determined by a degree of pressure reduction (vacuum degree). The pressure and temperature for processing a pre-produced brewage in an alcohol vapor production step are preferably a pressure and a temperature, at which deterioration and the like of the components contained in the brewage can be suppressed, and further the alcohol component can be distilled and separated.

The conditions of pressure and temperature may be -98 kPa or more and -85 kPa or less and further 20°C or more and 55°C or less, and are preferably -98 kPa or more and -92 kPa or less and further 25°C or more and 45°C or less, more preferably -98 kPa or more and -94 kPa or less and further 30°C or more and 40°C or less, and particularly preferably -98 kPa and further 35°C.

Further, the vapor derived from a brewage is generated from the brewage at a temperature of 55°C or less under reduced pressure of -85 Pa or less. In the vapor, an alcohol component that evaporates more easily than water evaporates is contained as a main component, and components of delicious taste and aroma, which are soluble in the alcohol component, are also contained.

### (Condensation step)

In a condensation step, the vapor produced in the alcohol vapor production step is cooled to produce a condensate (Step S2) .

Specifically, the vapor derived from a brewage, which is produced in the alcohol vapor production step, is moved by utilizing pressure reduction, and condensed by cooling the vapor to a temperature lower than the temperature of the vapor.

In this regard, the cooling temperature at the time of condensing the vapor is a temperature lower by 5°C or more than the evaporation temperature of the vapor derived from a brewage, and is preferably 10°C or more and 35°C or less, more preferably 15°C or more and 30°C or less, and particularly preferably 15°C or more and 25°C or less, but the cooling temperature is not limited to these temperature ranges. In a case where the cooling temperature is high and close to the heating temperature of the vapor, the condensation efficiency of the vapor is poor, and therefore, this is not preferable. Further, in a case where the cooling temperature is low, the condensation efficiency of the vapor is improved, but the energy required for the cooling is increased, and therefore, this is not preferable.

### (Recovery step)

In a recovery step, the condensate produced in the condensation step is recovered (Step S3).

Specifically, the condensate produced by cooling in the condensation step is moved by utilizing pressure reduction, and is recovered by using a container such as a recovery tank.

The condensate recovered in the recovery step has an alcohol concentration higher than that of the brewage in the beginning.

In the method for distilling a brewage under reduced pressure according to the present embodiment, an alcohol component can be separated and recovered under a sealed condition with less oxygen under a low temperature, and therefore, the deterioration, denaturation, or decomposition of the components contained in the brewage can be suppressed.

As to the device for performing distillation under reduced pressure of a brewage in the present invention, it is suitable that a vacuum drying device (trade name "vacuum dryer FED-50" manufactured by F E C Co., Ltd.) as shown in FIG. 1 is used as a reduced-pressure distillation device.

In the vacuum drying device D shown in FIG. 1, a brewage inside the container 10 can be distilled under reduced pressure while maintaining the inside of the container 10 at a low temperature (for example, 20°C or more and 55°C or less). Therefore, the denaturation and decomposition of the aroma component and the like contained in the brewage are suppressed, and the alcohol concentration can be increased while maintaining the aroma component of the brewage.

The vacuum drying device D that is an example of a reduced-pressure drying device for a brewage according to the present embodiment can have a configuration of a relatively small-scale device. Therefore, by providing and arranging a vacuum drying device D in a sake brewery for producing Japanese rice wine, and by using Japanese rice wine produced in the sake brewery, a novel alcoholic beverage having an increased alcohol concentration can also be produced.

The time required for the processing of the distillation under reduced pressure differs depending on the device used for distillation under reduced pressure, and the amount, kind and the like of the brewage to be processed, but in general, the time is preferably around 2 to 6 hours in a process of 50 to 3000 L. This corresponds to 25 to 500 L/hour in terms of the processing speed of a brewage.

In a condensate (distillation fraction) obtained by the method for distilling a brewage under reduced pressure according to the present embodiment, the alcohol concentration is increased and the aroma and taste are not impaired because the distillation is performed at a low temperature under reduced pressure, and therefore, the condensate can be used as it is as a brewage.

Further, a condensate (distillation fraction) to be recovered has an alcohol concentration higher than the alcohol concentration of the brewage in the beginning, and therefore, can be aged.

The method for aging a brewage according to the present embodiment is characterized by further including an aging step (Step S4 in FIG. 2) of aging the condensate obtained in the above-described method for distilling a brewage under reduced pressure (Steps S1 to S3 in FIG. 2) for one year or more.

### (Aging step)

The period of the aging is preferably one year or more, more preferably two years or more, furthermore preferably three years or more, and particularly preferably five years or more, but the period is not limited these periods. By prolonging the period of the aging, the aroma and taste become deep and aged.

### [Example]

Hereinafter, the present invention will be specifically described with reference to specific Examples, however, the present invention is not limited to the following Examples.

In the following Examples, with regard to Japanese rice wine concentrated by distillation under reduced pressure, and Japanese rice wine aged after distillation under reduced pressure, sensory evaluation of Japanese rice wine obtained by heating at high temperature and by performing distillation, and Japanese rice wine obtained by processing by a zeolite membrane permeation method or a freeze concentration method, was performed.

### <Example 1>

A vacuum drying device (trade name "vacuum dryer FED-50" manufactured by F E C Co., Ltd.) was used as a reduced-pressure distillation device. Into a container, 10 L of pre-produced refined sake was charged, the pressure was reduced to -98 kPa, and the pre-produced refined sake was distilled at a temperature inside container of 35°C for 30 minutes under reduced pressure. The recovered condensate was 2 L, and 8 L of liquid remained in the container. The recovered condensate (alcoholic beverage having an alcohol content of around 50 degrees) was subjected to the evaluation.

### <Example 2>

The condensate of Example 1 was stored and aged at 20°C for 12 months. The condensate after aging (alcoholic beverage after aging) was subjected to the evaluation.

### <Test 1: Sensory evaluation of alcoholic beverage of Example 1>

Sensory evaluation on the items of "taste, color, and aroma" of the alcoholic beverage (recovered condensate) of Example 1 obtained by distillation under reduced pressure was performed by five panelists. The results are shown in Table 2. In Tables 2 and 3, "⊙" indicates very good, "○" indicates good, "Δ" indicates average, and "×" indicates slightly poor.

**[Table 2]**

| Panelist | Sensory evaluation | | |
|---|---|---|---|
| | Taste | Aroma | Color |
| A | ⊙ | ⊙ | ⊙ |
| B | ○ | ⊙ | ○ |
| C | ⊙ | ⊙ | ⊙ |
| D | ○ | ○ | ○ |
| E | ○ | ○ | ⊙ |

### <Test 2: Sensory evaluation of alcoholic beverage of Example 2>

The alcoholic beverage of Example 2 (one obtained by aging a recovered condensate) obtained by aging after distillation under reduced pressure, was subjected to sensory evaluation by five panelists in a similar manner as in Test 1. The results are shown in Table 3.

**[Table 3]**

| Panelist | Sensory evaluation | | |
|---|---|---|---|
| | Taste | Aroma | Color |
| A | ⊙ | ⊙ | ⊙ |
| B | ○ | ⊙ | ○ |
| C | ⊙ | ⊙ | ○ |
| D | ⊙ | ○ | ○ |
| E | ⊙ | ⊙ | ⊙ |

From the above test results, it has been found that a brewage having an alcohol concentration increased by a reduced-pressure distillation method is excellent in the aroma and taste. Further, it has been found that by aging after performing distillation under reduced pressure, the aroma and taste become more favorable.

### REFERENCE SIGNS LIST

- D:: Vacuum drying device
- 10:: Container
11: Vapor chamber
12: Discharge pipe
14: Discharge box
13: Valve for discharge
15: Stirring blades
16: Inlet port
17: Exhaust port
18: Exhaust pipe
- 20:: Capacitor
21: Cooling pipe
22: Cooling unit
23: Water supply pipe
24: Drain pipe
- 30:: Ejector
30a: Fluid inlet port
30b: Fluid suction port
31: Pump
32: Water supply pipe
33: Drain pipe
34: Water tank
- 40:: Pipe
41: Condensate recovery pipe
42: Recovery valve
43: Condensate recovery tank
44: Vacuum valve

## Claims

1. A method for distilling a pre-produced brewage under reduced pressure, comprising:
an alcohol vapor production step of producing vapor derived from a brewage at a temperature of 55°C or less by performing pressure reduction on the brewage;
a condensation step of producing a condensate by cooling the vapor produced in the alcohol vapor production step; and
a recovery step of recovering the condensate produced in the condensation step.

2. The method for distilling a pre-produced brewage under reduced pressure according to claim 1, wherein
pressure is reduced to -85 kPa or less in the alcohol vapor production step.

3. The method for distilling a pre-produced brewage under reduced pressure according to claim 1 or 2, wherein
the vapor is cooled to 15°C or more and 30°C or less in the condensation step.

4. The method for distilling a pre-produced brewage under reduced pressure according to any one of claims 1 to 3, wherein
the brewage is Japanese rice wine.

5. The method for distilling a pre-produced brewage under reduced pressure according to claim 4, wherein
the Japanese rice wine is refined sake.

6. The method for distilling a pre-produced brewage under reduced pressure according to claim 5, wherein
the refined sake is Junmai-shu (pure rice sake).

7. A method for aging a brewage, further comprising:
an aging step of aging the condensate obtained in the method for distilling a pre-produced brewage under reduced pressure according to any one of claims 1 to 6 for one year or more.

8. An alcoholic beverage, obtained by distilling a pre-produced brewage at a temperature of 55°C or less under reduced pressure of -85 kPa or less.
